# EUROPEAN PATENT APPLICATION

(11) **EP 4 514 015 A1**
(43) Date of publication of application: **26.02.2025**
(21) Application number: 23870920.8
(22) Date of filing: 27.09.2023
(51) Int. Cl.: H04W 72/0446

(54) **SIDELINK RESOURCE DETERMINATION METHOD AND DEVICE, AND STORAGE MEDIUM**

(30) Priority: 30.09.2022 CN 202211218290
(71) Applicant: ZTE Corporation, Shenzhen, Guangdong 518057 (CN)
(72) Inventor: CHEN, Jie, Shenzhen, Guangdong 518057 (CN); LU, Youxiong, Shenzhen, Guangdong 518057 (CN); XING, Weimin, Shenzhen, Guangdong 518057 (CN); MIAO, Ting, Shenzhen, Guangdong 518057 (CN); HE, Haigang, Shenzhen, Guangdong 518057 (CN)
(74) Representative: Aipex B.V.
(86) International application number: PCT/CN2023/122004
(87) International publication number: WO 2024/067693

(57) **Abstract**

Provided are a sidelink resource determination method, a sidelink resource determination device, and a storage medium. The sidelink resource determination method is applied to a first node and includes determining (S710) a physical-layer candidate time and frequency resource set for sidelink transmission occasions from a sidelink resource pool according to system configuration information; and determining (S720) physical-layer time and frequency resources for sidelink transmission occasions from the physical-layer candidate time and frequency resource set. The physical-layer candidate time and frequency resource set does not include first resources occupying L consecutively indexed subchannels in the frequency domain, or includes second resources occupying L subchannels in the frequency domain, or does not include first resources occupying L consecutively indexed subchannels in the frequency domain and includes second resources occupying L subchannels in the frequency domain, where at least one pair of adjacent subchannels for the second resources are nonconsecutively indexed, and L denotes an integer greater than or equal to 1.

## Description

### TECHNICAL FIELD

The present application relates to the field of wireless communications, for example, a sidelink resource determination method, a sidelink resource determination device, and a storage medium.

### BACKGROUND

When a sidelink unlicensed (SL-U) device operates in an unlicensed spectrum, it is first required to determine a sidelink (SL) resource pool in the unlicensed spectrum. The SL-U resource pool includes N resource block (RB) sets and N-1 guard bands. Here N denotes an integer greater than or equal to 1. A guard band including multiple consecutive RBs may be configured, preconfigured, or predefined between every two adjacent RB sets by a system.

When selecting subchannels in the frequency domain range of an SL resource pool, some subchannels may include resources from a guard band. However, in the Third Generation Partnership Project (3GPP) protocol, it is stipulated that the use of resources in the guard band is conditional on the following: a user equipment (UE) performs Listen Before Talk (LBT) on both of the two RB sets adjacent to the guard band successfully and performs transmission on both of the two RB sets. However, transmission resources selected from the SL resource pool by an SL-U device may not satisfy the conditions for using resources in the guard band. As a result, transmission fails on the selected transmission resources. Additionally, in traditional New Radio (NR) SL, when resources for data transmission are selected, it is typical to consider only resources of consecutive subchannels. This works well in a resource pool based on consecutive RB transmission. However, in a resource pool based on interleaved RB transmission, some candidate resources composed of incompletely consecutive subchannels may also be used for data transmission. Therefore, relying solely on traditional resource selection methods may result in missing some available resources and reducing the efficiency of sidelink communication.

### SUMMARY

Embodiments of the present application provide a sidelink resource determination method, a sidelink resource determination device, and a storage medium.

Embodiments of the present application provide a sidelink resource determination method. The method is applied to a first node.

The method includes determining a physical-layer candidate time and frequency resource set for sidelink transmission occasions from a sidelink resource pool according to system configuration information; and determining physical-layer time and frequency resources for sidelink transmission occasions from the physical-layer candidate time and frequency resource set. The physical-layer candidate time and frequency resource set does not include first resources that occupy L consecutively indexed subchannels in the frequency domain; or the physical-layer candidate time and frequency resource set includes second resources that occupy L subchannels in the frequency domain, where at least one pair of adjacent subchannels for the second resources are nonconsecutively indexed; or the physical-layer candidate time and frequency resource set does not include first resources that occupy L consecutively indexed subchannels in the frequency domain; and the physical-layer candidate time and frequency resource set includes second resources that occupy L subchannels in the frequency domain, where at least one pair of adjacent subchannels for the second resources are nonconsecutively indexed, where L denotes an integer greater than or equal to 1.

Embodiments of the present application provide a sidelink resource determination device.

The sidelink resource determination device includes a memory configured to store a program and a processor configured to execute the program to perform the following: determining a physical-layer candidate time and frequency resource set for sidelink transmission occasions from a sidelink resource pool according to system configuration information; and determining physical-layer time and frequency resources for sidelink transmission occasions from the physical-layer candidate time and frequency resource set, where the physical-layer candidate time and frequency resource set does not include first resources that occupy L consecutively indexed subchannels in a frequency domain; or the physical-layer candidate time and frequency resource set includes second resources that occupy L subchannels in a frequency domain, where at least one pair of adjacent subchannels for the second resources are nonconsecutively indexed; or the physical-layer candidate time and frequency resource set does not include first resources that occupy L consecutively indexed subchannels in a frequency domain; and the physical-layer candidate time and frequency resource set includes second resources that occupy L subchannels in the frequency domain, where at least one pair of adjacent subchannels for the second resources are nonconsecutively indexed, where L denotes an integer greater than or equal to 1.

Embodiments of the present application provide a storage medium. The storage medium comprises a program stored therein. When the program is executed, the sidelink resource determination method of the embodiments of the present application is performed.

### BRIEF DESCRIPTION OF DRAWINGS

FIG. 1 is a diagram illustrating carrier frequency domain distribution for new radio unlicensed spectrum (NR-U).
FIG. 2 is a diagram illustrating a communication scenario of SL devices.
FIG. 3 is a diagram illustrating resource allocation of an SL resource pool.
FIG. 4 is a diagram of an SL resource pool.
FIG. 5 is another diagram of an SL resource pool.
FIG. 6 is a diagram of an interleaved SL resource pool.
FIG. 7 is a flowchart of a sidelink resource determination method according to an embodiment of the present application.
FIG. 8 is a diagram illustrating first resources according to an embodiment of the present application.
FIG. 9 is another diagram illustrating first resources according to an embodiment of the present application.
FIG. 10 is a diagram illustrating the structure of a sidelink resource determination apparatus according to an embodiment of the present application.
FIG. 11 is a diagram illustrating the structure of a sidelink resource determination device according to an embodiment of the present application.

### DETAILED DESCRIPTION

Embodiments of the present application are described hereinafter in conjunction with drawings.

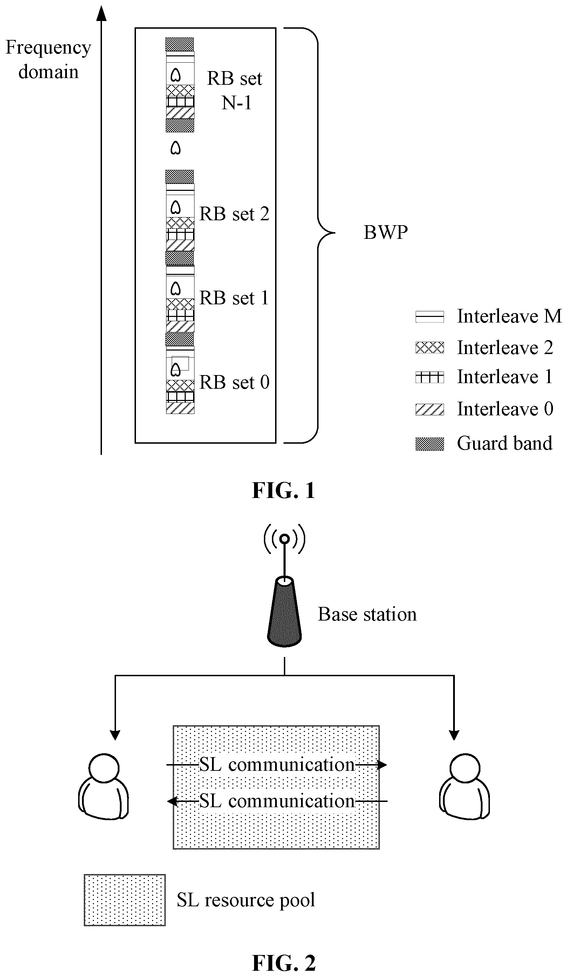

In 5G NR-U, M consecutive interleaved RBs are defined on a carrier, with each interleaved RB being equally spaced. Different interleaves are comb-shaped in the frequency domain, and numbered from 0 to M-1. Additionally, N consecutive RB sets are defined in the frequency domain, and numbered from 0 to N-1. FIG. 1 is a diagram illustrating carrier frequency domain distribution for NR-U. As shown in FIG. 1, for the NR-U, an indication method with two levels being X+Y is used for indicating data resources. Herein, X represents the interleave used for physical uplink shared channel (PUSCH) resources, and Y represents the consecutive RB sets used for PUSCH resources. In this way, the UE is allowed to determine the frequency domain resource position within the bandwidth part (BWP) according to the indication information. The smallest indication unit in the frequency domain refers to all physical RB resources within an RB set under one interleave.

SL devices communicate using resources from the SL resource pool, without the need for data forwarding by the base station. FIG. 2 is a diagram illustrating a communication scenario of SL devices. In FIG. 2, SL communication between UE1 and UE2 is conducted using resources from the SL resource pool, without the need for base station scheduling or data forwarding.

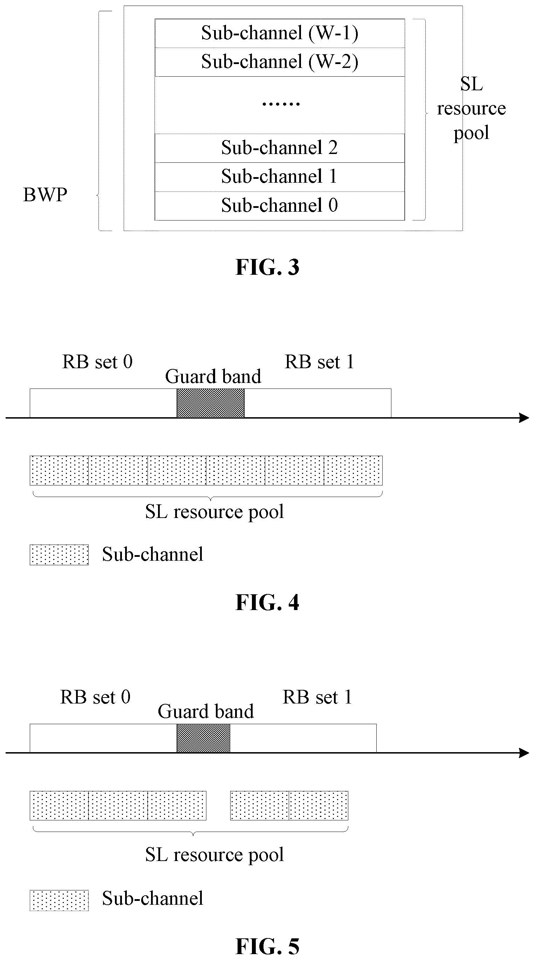

The smallest unit of data scheduling in the SL resource pool is a subchannel. According to 3GPP Rel-16/Rel-17, based on system configuration, preconfiguration, or predefined information, the SL resource pool consists of W consecutive subchannels in the frequency domain. Typically, a data transmission occupies several consecutive subchannels, with each subchannel including several consecutive RBs determined based on system configuration or preconfiguration information. FIG. 3 is a diagram illustrating resource allocation of an SL resource pool. As shown in FIG. 3, the BWP of the SL resource pool includes W consecutive subchannels: subchannel 0 to subchannel W-1.

After determining the SL resource pool, when indicating resources, it is sufficient to determine the SL data resource position by indicating the frequency domain start position of the subchannels occupied by the SL data and indicating the number of used subchannels. Data transmission requires at least one subchannel. Once the UE has determined the frequency domain position of its data, it uses the frequency resource indication value (FRIV) in the sidelink control information (SCI) to indicate the frequency domain information of one or more physical sidelink shared channel (PSSCH) resources reserved by the SCI.

In 3GPP Rel-18, for SL-U, both continuous RB transmission similar to R-16/R-17 and interleaved RB-based data transmission similar to NR-U are supported. Additionally, an SL resource pool includes an integer number of RB sets, which means that the smallest resource allocation unit, the subchannel, may be continuous RBs. FIGS. 4 and 5 are diagrams of two different SL resource pools. In FIGS. 4 and 5, RB set 0 and RB set 1 are two adjacent RB sets. RBs between RB set 0 and RB set 1 belong to a guard band. RBs within the guard band may be allocated as resources within the subchannels of the SL resource pool or may be used solely for rate matching. FIGS. 4 and 5 illustrate the inclusion of RBs from the guard band into the subchannels of the SL resource pool. The difference between FIG. 4 and FIG. 5 is that in FIG. 4, the subchannels in the SL resource pool are arranged continuously, while in FIG. 5, the start position of the subchannels within each RB set is aligned with the start position of the RB set.

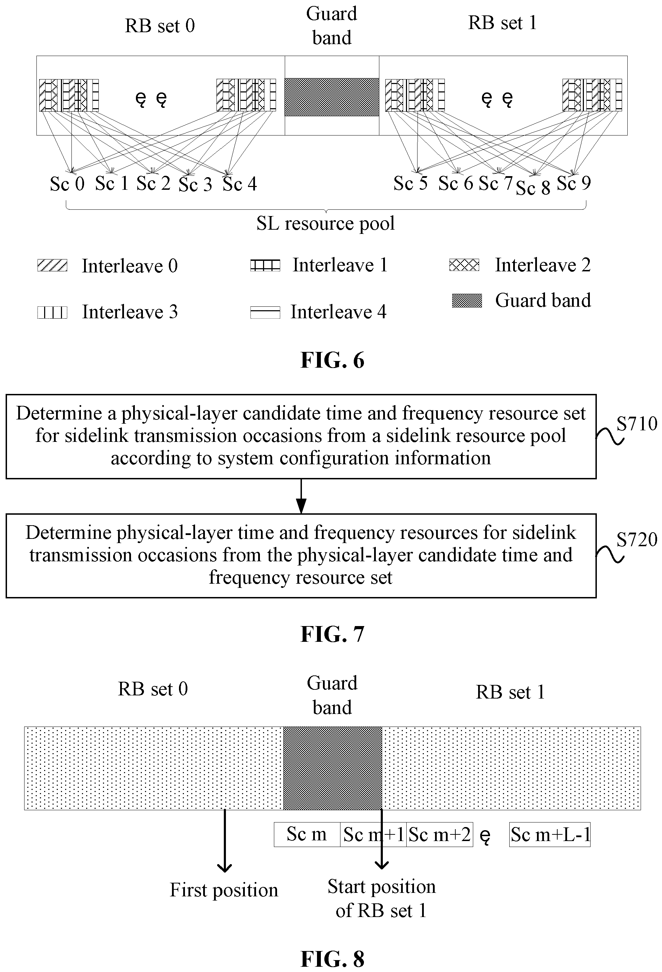

A subchannel may also consist of interleaved RBs. FIG. 6 is a diagram of an interleaved SL resource pool. "Sc" in FIG. 6 represents subchannel.

The transmission occasions for SL-U devices typically require L subchannels in the frequency domain. However, due to the presence of guard bands between RB sets within the SL resource pool and the restrictions on the use of these guard bands, as well as the possibility that interleaved transmission in NR may require consistent interleaving across different RB sets, the L consecutively indexed subchannels corresponding to a single transmission occasion for SL-U devices may be unavailable. Therefore, when selecting time and frequency resources for a transmission occasion, SL-U devices need to consider these factors.

FIG. 7 is a flowchart of a sidelink resource determination method according to an embodiment of the present application. As shown in FIG. 7, the sidelink resource determination method of this embodiment includes S710 and S720.

In S710, a physical-layer candidate time and frequency resource set for sidelink transmission occasions is determined from a sidelink resource pool according to system configuration information.

The physical-layer candidate time and frequency resource set does not include first resources that occupy L consecutively indexed subchannels in the frequency domain; or the physical-layer candidate time and frequency resource set includes second resources that occupy L subchannels in the frequency domain, where at least one pair of adjacent subchannels for the second resources are nonconsecutively indexed; or the physical-layer candidate time and frequency resource set does not include first resources that occupy L consecutively indexed subchannels in the frequency domain and the physical-layer candidate time and frequency resource set includes second resources that occupy L subchannels in the frequency domain, where at least one pair of adjacent subchannels for the second resources are nonconsecutively indexed. Herein, L denotes an integer greater than or equal to 1.

In the SL-U system, devices operating in unlicensed frequency bands also work based on an SL resource pool. The SL resource pool includes N consecutively numbered subchannels that are generally used as the smallest scheduling and indication unit for SL data transmission. SL-U transmission includes transmission based on consecutive RBs and transmission based on interleaved RBs. When configured for transmission based on consecutive RBs, the RB resources included in the subchannel are also consecutive RBs within the SL resource pool. When the SL resource pool is configured for interleaved transmission, the subchannel is composed of interleaved RBs. Regardless of the form, for a UE, the resource selection can ultimately be abstracted to the model shown in FIG. 3.

When selecting resources in the SL resource pool, the UE determines L subchannels in the SL resource pool as the physical transmission resources for sidelink shared channel based on higher-layer or physical layer indications. In mode 1, the UE directly determines L subchannels in the SL resource pool according to the indication of the base station. In mode 2, the UE needs to perform sensing or random resource selection within the time interval to select appropriate physical transmission resources for sidelink shared channel that includes L subchannels.

When the UE performs sensing-based resource selection, it needs to determine candidate resources Rx, y within the time interval and report the candidate resource set that satisfies the requirements to the higher layer. Then the higher layer determines the final PSSCH time and frequency resources. According to the SL mode 2 mechanism for the UE to determine the candidate resource set, L consecutive subchannels starting from the initial subchannel are considered a single-slot candidate resource. If this mechanism is continued, some candidate resources within the time interval in the SL resource pool are unavailable, and some additional candidate resources are available but cannot be identified using the traditional mechanism. To more effectively determine the candidate resources for the UE during resource selection, it is necessary to consider the handling of unavailable candidate resources as well as additional candidate resources. When the UE performs random-based resource selection, resources within the candidate resource set indicated in the physical layer are randomly selected in the media access control (MAC) layer of the UE to determine the final time and frequency resources, and similarly, the handling of unavailable and additional candidate resources is required to be considered.

Therefore, this embodiment provides a sidelink resource determination method. The method is applied to a first node. The first node may be a UE or a network device that requires to use SL resources for uplink data transmission. First, a physical-layer candidate time and frequency resource set for sidelink transmission occasions is determined from a sidelink resource pool according to system configuration information. The physical-layer candidate time and frequency resource set is a collection of candidate time and frequency resources available for the first node to perform sidelink transmission. The candidate time and frequency resource set is scheduled in units of subchannels, including multiple subchannels, where each subchannel includes multiple consecutive RBs, or each subchannel includes one or more interleaved RBs.

Determining physical-layer time and frequency resources according to system configuration information includes determining physical-layer time and frequency resources according to system-configured, preconfigured, or predefined information. Here the system configuration, also referred to as configuration, is generally provided by the network or the base station and is sent to the first node from the network or the base station via signaling. Here the preconfiguration is usually provided by other higher-layer entities, such as the higher layer of the first node or other network entities. Alternatively, the configuration information for the physical-layer time and frequency resources is predefined in the first node.

In a traditional SL resource pool that includes multiple consecutive RB sets and guard bands between adjacent RB sets, there is a risk that a UE may select RBs within the guard bands when selecting transmission resources from the SL resource pool. However, in some cases, RBs within the guard bands are not available. To address this problem, in this embodiment, first a physical-layer candidate time and frequency resource set for sidelink transmission occasions is determined from a sidelink resource pool according to system configuration information. The first resources are excluded from the physical-layer candidate time and frequency resource set, or, the second resources are added to the physical-layer candidate time and frequency resource set, or both the first resources are excluded from and the second resources are added to the physical-layer candidate time and frequency resource set. The first resources are candidate resources required to be excluded from the sidelink resource pool. The second resources are additional candidate resources available for sidelink transmission. Both the first resources and second resources include L subchannels. Herein L denotes an integer greater than or equal to 1.

The physical-layer candidate time and frequency resource set for sidelink transmission occasions is determined from the sidelink resource pool in the following three manners.
(1) The physical-layer candidate time and frequency resource set does not include the first resources that occupy L consecutively indexed subchannels in the frequency domain. Each subchannel may include multiple consecutively indexed RBs or include one or more interleaved RBs from one or more consecutive RB sets. For example, in the SL resource pool shown in FIG. 3, the first resources include subchannel 1 and subchannel 2, or the first resources include subchannel 2, subchannel 3, and subchannel 4. Thus, when the physical-layer time and frequency resources for sidelink transmission occasions are selected, the first resources are not selected.
(2) The physical-layer candidate time and frequency resource set includes the second resources that occupy L subchannels in the frequency domain, where at least one pair of adjacent subchannels for the second resources are nonconsecutively indexed. In traditional SL resource selection, only consecutively indexed subchannels in the frequency domain can be selected. In contrast, in this embodiment of the present application, the second resources that occupy nonconsecutively indexed subchannels can be additionally indicated. The second resources also occupy L subchannels in the frequency domain, but occupy at least one pair of adjacent subchannels that are nonconsecutively indexed. For example, in the SL resource pool shown in FIG. 3, in traditional resource selection, only consecutively indexed subchannels such as subchannel 0, subchannel 1, and subchannel 2 or consecutively indexed subchannels such as subchannel 1, subchannel 2, and subchannel 3 may be selected. In contrast, in this embodiment of the present application, the second resources may be composed of subchannel 0, subchannel 1, and subchannel 3. Here subchannel 0 and subchannel 1 are consecutively indexed while subchannel 1 and subchannel 3 are nonconsecutively indexed. Thus, in this embodiment of the present application, the second resources may be selected to serve as physical-layer time and frequency resources for sidelink transmission occasions.
(3) The physical-layer candidate time and frequency resource set does not include first resources that occupy L consecutively indexed subchannels in the frequency domain; and the physical-layer candidate time and frequency resource set includes second resources that occupy L subchannels in the frequency domain. Here at least one pair of adjacent subchannels for the second resources are nonconsecutively indexed. This manner essentially combines the preceding manner (1) and manner (2). First, in the sidelink resource pool, the first resources are excluded and the second resources are added in a candidate or initialized candidate resource set or a candidate resource set required to be reported after the MAC layer or the physical layer completes sensing. In this manner, the range of selection of the physical-layer time and frequency resources for sidelink transmission occasions is broader: The first resources are not selected, and the second resources can be selected.

The following describes the characteristics of the first resources:

The first resources may have any of the characteristics (a) to (m):
(a) The index of the first resource block (RB) of the lowest subchannel of the L consecutively indexed subchannels is greater than or equal to the index of the first RB in the n-th RB set and less than or equal to the index of the first RB in the (n+1)-th RB set.
   FIG. 8 is a diagram illustrating first resources according to an embodiment of the present application. FIG. 8 illustrates an example in which transmission is performed on subchannels composed of consecutive RBs. As shown in FIG. 8, the first resources include subchannels Sc m, Sc m+1, Sc m+2, ..., Sc m+L-1, totaling L subchannels. The index of the first RB of the lowest subchannel (that is, Sc m) of the first resources is greater than or equal to the index of the first RB in the n-th RB set (that is, RB set 0). Additionally, the index of the first RB of the lowest subchannel is less than or equal to the index of the first RB in the (n+1)-th RB set (that is, RB set 1). Each RB set includes multiple RBs indexed in ascending order. RBs in adjacent RB sets are also indexed in ascending order. Thus, the start RB of the start subchannel of the first resources can be positioned after the first position shown in FIG. 8. Here the first position is the position of the first RB in RB set 0. This means the index of the start RB of the lowest subchannel of the first resources is greater than or equal to the index of the first RB in RB set 0 and less than or equal to the index of the first RB in RB set 1. The range from the first position to the start position of RB set 1 represents the start RB range of the lowest subchannel of the first resources. The L subchannels starting from this start RB range constitute the first resources. By setting the start RB of the lowest subchannel of the first resources, that is, the start point of the lowest subchannel of the first resources, it is possible to avoid selecting physical-layer time and frequency resources that include only resources in guard bands and resources in a single RB set.
(b) The first RB of the lowest subchannel of the L consecutively indexed subchannels is in a guard band.
   This also defines the start point of the first resources. When the first RB of the lowest subchannel of the first resources is in the guard band, the start point of the first resources is in the guard band. This configuration of the first resources helps to avoid selecting physical-layer time and frequency resources that include only resources from a single RB set adjacent to the guard band.
(c) The lowest subchannel of the L consecutively indexed subchannels includes RBs in a guard band.
   In certain transmission scenarios, if sidelink transmission is performed using resources in the guard band, transmission may be affected, depending on the system configuration and operating environment. Therefore, the first resources can also be L consecutive subchannels among which the lowest subchannel includes RBs in the guard band. In other words, as long as the lowest subchannel includes RBs in the guard band, the involved resources are excluded.
(d) The lowest subchannel of the L consecutively indexed subchannels includes RBs in a guard band. Here the number of the RBs exceeds a first threshold.
   In this case, the L consecutive subchannels are identified as the first resources required to be excluded only if the number of RBs in the guard band in the lowest subchannel of the L consecutive subchannels exceeds the first threshold.
(e) The lowest subchannel of the L consecutively indexed subchannels includes RBs in a guard band. Here the ratio of the number of the RBs to the size of the lowest subchannel exceeds a second threshold.
   The more RBs in the guard band are used for sidelink transmission, the higher the probability and severity of interference with the transmitted data. Therefore, the L consecutive subchannels are identified as the first resources required to be excluded only if the ratio of the number of RBs in the guard band in the lowest subchannel to the total number of RBs in the lowest subchannel exceeds the second threshold.
(f) The frequency domain RB resources of the L consecutively indexed subchannels include RBs in an RB set and RBs in a guard band. Here the number of the RBs in the guard band exceeds a third threshold.
   In this case, all RBs in the L consecutive subchannels are evaluated. If the L consecutive subchannels include both RBs in the RB set and RBs in the guard band and if the number of RBs in the guard band exceeds the third threshold, then these L consecutive subchannels are identified as the first resources required to be excluded. The third threshold for the number of RBs may be an absolute value, a ratio, or a proportion.
(g) At least one subchannel of the L consecutively indexed subchannels includes RBs in a guard band.
   In this case, as long as any of the L consecutive subchannels includes RBs in the guard band, the first resources composed of these L consecutive subchannels are required to be excluded.
(h) The index of the last RB of the highest subchannel of the L consecutively indexed subchannels is greater than or equal to the index of the last RB in the n-th RB set and less than or equal to the index of the second RB in the (n+1)-th RB set.

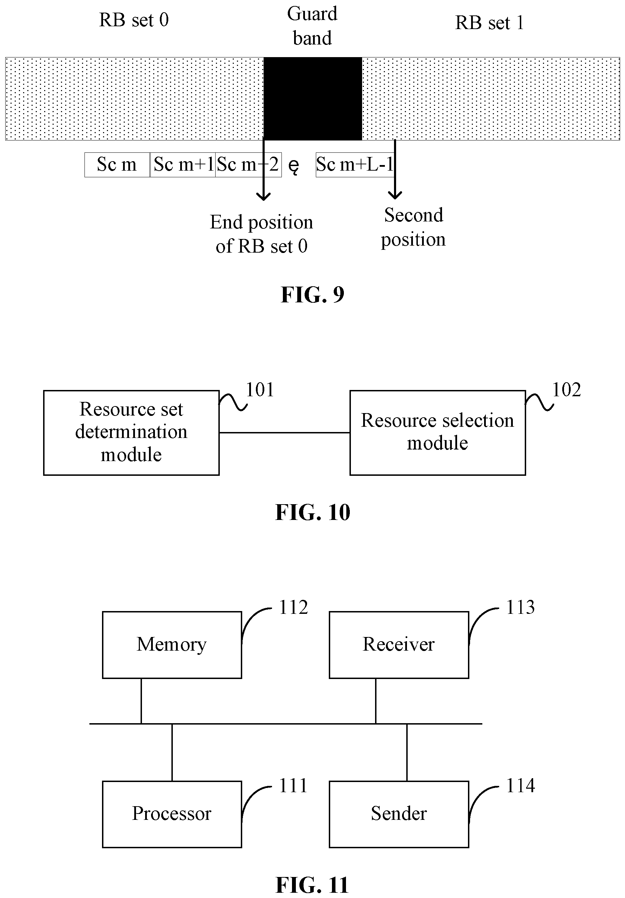

   In FIG. 8, the start point of the first resources is defined. In this embodiment of the present application, the end point of the first resources is defined. FIG. 9 is another diagram illustrating first resources according to an embodiment of the present application. FIG. 9 illustrates an example in which transmission is performed on subchannels composed of consecutive RBs. As shown in FIG. 9, the first resources include subchannels Sc m, Sc m+1, Sc m+2, ..., Sc m+L-1, totaling L subchannels. The index of the last RB of the highest subchannel (that is, Sc m+L-1) of the first resources is greater than or equal to the index of the last RB in the n-th RB set (that is, RB set 0). Additionally, the index of the last RB of the highest subchannel is less than or equal to the index of the second RB in the (n+1)-th RB set (that is, RB set 1). Each RB set includes multiple RBs indexed in ascending order. RBs in adjacent RB sets are also indexed in ascending order. Thus, the end RB of the end subchannel of the first resources is after the last RB of RB set 0, meaning that the index of the end RB of the end subchannel of the first resources is greater than or equal to the index of the last RB in RB set 0. Additionally, the end RB of the end subchannel of the first resources is before the second position in FIG. 9. Here the second position is the position of the second RB in RB set 1, meaning that the index of the end RB of the end subchannel of the first resources is less than or equal to the index of the second RB in RB set 1. The L subchannels before this end RB range constitute the first resources. By setting the end RB of the end subchannel of the first resources, that is, the end point of the lowest subchannel of the first resources, it is possible to avoid selecting physical-layer time and frequency resources that include only resources in guard bands and resources in a single RB set.
(i) The last RB of the highest subchannel of the L consecutively indexed subchannels is in a guard band.
   This also defines the end point of the first resources. When the last RB of the highest subchannel of the first resources is in the guard band, the end point of the first resources is in the guard band. This configuration of the first resources helps to avoid selecting physical-layer time and frequency resources that include only resources from a single RB set adjacent to the guard band.
(j) The highest subchannel of the L consecutively indexed subchannels includes RBs in a guard band.
   In certain transmission scenarios, if sidelink transmission is performed using resources in the guard band, transmission may be affected, depending on the system configuration and operating environment. Therefore, the first resources can also be L consecutive subchannels among which the highest subchannel includes RBs in the guard band. In other words, as long as the highest subchannel includes RBs in the guard band, the involved resources are excluded.
(k) The highest subchannel of the L consecutively indexed subchannels includes RBs in a guard band. Here the number of the RBs exceeds a fourth threshold.
   In this case, the L consecutive subchannels are identified as the first resources required to be excluded only if the number of RBs in the guard band in the highest subchannel of the L consecutive subchannels exceeds the fourth threshold.
(l) The highest subchannel of the L consecutively indexed subchannels includes RBs in a guard band. Here the ratio of the number of the RBs to the size of the highest subchannel exceeds a fifth threshold.
   The more RBs in the guard band are used for sidelink transmission, the higher the probability and severity of interference with the transmitted data. Therefore, the L consecutive subchannels are identified as the first resources required to be excluded only if the ratio of the number of RBs in the guard band in the highest subchannel to the total number of RBs in the highest subchannels exceeds the fifth threshold.
(m) Frequency domain RBs included in the L consecutively indexed subchannels have different interleaves across different RB sets.

In an embodiment, when the SL resource pool includes interleaved resources shown in FIG. 6, the first resources also include that the RB sets of the L consecutively indexed subchannels and interleaved RBs of interleaved resources are different in different RB sets. As shown in FIG. 6, it is assumed that candidate resources composed of four consecutive subchannels: Sc 4, Sc 5, Sc 6, and Sc 7 are selected. These candidate resources include RBs on interleave 4 in RB set 0 and RBs on interleaves 0, 1, and 2; therefore, candidate resources composed of four consecutive subchannels starting from Sc 4 are unavailable and thus are determined as the first resources.

In terms of the first resources having any one of the characteristics (a) to (m), the index of the first RB, the index of the second RB, the first threshold, the second threshold, the third threshold, the fourth threshold, and the fifth threshold are system-configured or predefined; or the index of the first RB, the index of the second RB, the first threshold, the second threshold, the third threshold, the fourth threshold, and the fifth threshold are associated with at least one of the following: a channel busy ratio (CBR), a packet priority, a channel access priority class (CAPC), or an RB set index.

The following describes the characteristics of the second resources:
The second resources may have any of the characteristics (w) to (z):
(w) The subchannels included in the second resources have the same interleaved indexes in consecutive RB sets.
   That the second resources include L not completely consecutive subchannels primarily applies to an interleaved SL resource pool, such as the SL resource pool shown in FIG. 6. If the L subchannels have the same interleaved indexes in consecutive RB sets, the L subchannels can be considered as the second resources even if the L consecutive subchannels are nonconsecutively indexed. For example, the traditional sidelink resource selection method can determine and indicate L consecutive subchannels; in contrast, in FIG. 6 of this embodiment, the four subchannels Sc 0, Sc 1, Sc 5, and Sc 6, starting with Sc 0, have the same interleaved indexes (interleave 0 and interleave 1) in consecutive RB sets (RB set 0 and RB set 1) and thus are available candidate resources.
(x) The subchannels included in the second resources have consecutive interleaved indexes in any RB set.
   In this case, the L subchannels have consecutive interleaved indexes in a single RB set, so the resources composed of the L subchannels can be considered as the second resources.
(y) The subchannels included in the second resources have nonconsecutive interleaved indexes in any RB set.
   In this case, the L subchannels have nonconsecutive interleaved indexes in a single RB set, so the resources composed of the L subchannels can be considered as the second resources.
(z) The subchannels included in the second resources are in consecutive RB sets.

If the L subchannels are in consecutive RB sets, even if the indexes of the L subchannels are discontinuous or not fully continuous, the L subchannels are still considered as the second resources.

In an embodiment, the preceding constraints on the physical-layer candidate time and frequency resource set are defined in the frequency domain. For the sidelink resource determination method of this embodiment of the present application, the physical-layer time and frequency resources in the time domain include one slot or multiple consecutive slots. In other words, when the physical-layer time and frequency resources for sidelink transmission occasions are determined from the physical-layer candidate time and frequency resource set, the principle for determination in the frequency domain is that the selected physical-layer time and frequency resources occupy one slot or multiple consecutive slots.

In an embodiment, the system configuration information includes indication information on whether to exclude the first resources, or the system configuration information includes indication information on whether to add the second resources, or the system configuration information includes indication information on whether to exclude the first resources and add the second resources.

In this embodiment, the first resources occupy L consecutively indexed subchannels in the frequency domain, meaning the indexes of the L subchannels are arranged in ascending order. Among these L subchannels, the subchannel indexed k and the subchannel with the smallest index greater than k are referred to as a pair of adjacent subchannels. The second resources also occupy L subchannels in the frequency domain, but at least one pair of adjacent subchannels among the L subchannels occupied by the second resources are nonconsecutively indexed. This means that between at least two adjacent subchannels among the L subchannels, there are other subchannels not belonging to the second resources. For example, when the subcarrier spacing (SCS) is 15 kHz, one subchannel corresponds to one interleave within one RB set. If L = 4 and the start subchannel is indexed 1, subchannels indexed 1, 2, 3, 4 are L consecutively indexed subchannels, and subchannels indexed 1, 2, 10, 11 or indexed 1, 3, 5, 7 are L nonconsecutively indexed subchannels.

In step S720, physical-layer time and frequency resources for sidelink transmission occasions are determined from the physical-layer candidate time and frequency resource set.

After determining the physical-layer candidate time and frequency resource set, it is feasible to determine the physical-layer time and frequency resources for sidelink transmission occasions from the physical-layer candidate time and frequency resource set by using different resource selection methods.

In this embodiment, the determined physical-layer candidate time and frequency resource set does not include the first resources, includes the second resources, or does not include the first resources and includes the second resources, so the selection range of the physical-layer time and frequency resources for sidelink transmission occasions is restricted. By setting reasonable ranges for the first and second resources, it is possible to prevent the first node from selecting unavailable resources when selecting sidelink transmission resources.

After the selection of physical-layer time and frequency resources, the determined physical-layer time and frequency resources may be any of the following: consecutive RBs in the frequency domain, different interleaves on consecutive RB sets in the frequency domain, the same interleave on consecutive RB sets in the frequency domain, L consecutive subchannels, or L nonconsecutive subchannels.

The sidelink resource determination method of this embodiment determines the physical-layer candidate time and frequency resource set for sidelink transmission occasions from the sidelink resource pool according to system configuration information and then determines physical-layer time and frequency resources for sidelink transmission occasions from the physical-layer candidate time and frequency resource set. By configuring the physical-layer candidate time and frequency resource set to have the first resources excluded, or have the second resources added, or have the first resources excluded and the second resources added, it is possible that the selected resources for sidelink transmission satisfy the transmission requirements, avoiding transmission failures due to the unavailability of the selected resources.

Sidelink resource selection is divided into three methods: full sensing, partial sensing, and random selection. The higher layer of the first node configures or preconfigures one of these sidelink resource selection methods.

In an embodiment, determining the physical-layer candidate time and frequency resource set for sidelink transmission occasions from the sidelink resource pool according to the system configuration information includes that in a MAC layer, the first resources are excluded from the physical-layer candidate time and frequency resource set for sidelink transmission occasions; or in a MAC layer, the second resources are added to the physical-layer candidate time and frequency resource set for sidelink transmission occasions; or in a MAC layer, the first resources are excluded from the physical-layer candidate time and frequency resource set for sidelink transmission occasions, and the second resources are added to the physical-layer candidate time and frequency resource set for sidelink transmission occasions. This is the resource selection performed in the physical layer of the first node. In this case, in the physical layer of the first node, sidelink transmission resources are not excluded or added. Instead, after the unfiltered physical-layer candidate time and frequency resource set reported from the physical layer is received in the MAC layer of the first node. In the physical layer of the first node, the first resources are excluded, or, the second resources are added, or the first resources are excluded and the second resources are added within the physical-layer candidate time and frequency resource set according to the system configuration information. If the first node uses a full-sensing or partial-sensing method for transmission resource selection, the transmission resources are filtered in the MAC layer of the first node upon receiving the physical-layer candidate time and frequency resource set reported from the physical layer. If the first node uses a random selection method for transmission resource selection, in the MAC layer of the first node, the transmission resources are filtered when random resource selection is performed.

In an embodiment, determining the physical-layer candidate time and frequency resource set for sidelink transmission occasions from the sidelink resource pool according to the system configuration information includes that in a physical layer, the first resources are excluded when determining the physical-layer candidate time and frequency resource set for sidelink transmission occasions in a time interval; or in a physical layer, the second resources are added when determining the physical-layer candidate time and frequency resource set for sidelink transmission occasions in a time interval; or in a physical layer, the first resources are excluded when determining the physical-layer candidate time and frequency resource set for sidelink transmission occasions in a time interval, and the second resources are added when determining the physical-layer candidate time and frequency resource set for sidelink transmission occasions in the time interval. This is the resource selection performed in the physical layer of the first node. The physical layer of the first node filters the transmission resources. Here the time interval is the first step in the sidelink transmission process. In this case, the physical-layer candidate time and frequency resource set for sidelink transmission occasions has not been generated. In the physical layer of the first node, the first resources may be excluded, the second resources may be added, or, the first resources are excluded and the second resources are added when determining the physical-layer candidate time and frequency resource set for sidelink transmission occasions in some or all slots of the time interval.

In an embodiment, determining the physical-layer candidate time and frequency resource set for sidelink transmission occasions from the sidelink resource pool according to the system configuration information includes that in a physical layer, the first resources are excluded from an initialized physical-layer candidate time and frequency resource set for the sidelink transmission occasions; or in a physical layer, the second resources are added to an initialized physical-layer candidate time and frequency resource set for the sidelink transmission occasions; or in a physical layer the first resources are excluded from an initialized physical-layer candidate time and frequency resource set for the sidelink transmission occasions, and in the physical layer, the second resources are added to the initialized physical-layer candidate time and frequency resource set for the sidelink transmission occasions. This is also the resource selection performed in the physical layer of the first node. Here the initialization is the fourth step in the sidelink transmission process. In this case, the physical-layer candidate time and frequency resource set for sidelink transmission occasions has already been generated. During initialization, in the physical layer of the first node, the transmission resources are filtered. In the physical layer of the first node, the first resources may be excluded, the second resources may be added, or the first resources are excluded and the second resources are added in the initialized physical-layer candidate time and frequency resource set for the sidelink transmission occasions.

In an embodiment, determining the physical-layer candidate time and frequency resource set for sidelink transmission occasions from the sidelink resource pool according to the system configuration information includes that in a physical layer, the first resources are excluded from a physical-layer candidate time and frequency resource set reported from the physical layer to the MAC layer of the first node for the sidelink transmission occasions; or in a physical layer, the second resources are added to a physical-layer candidate time and frequency resource set reported from the physical layer to the MAC layer of the first node for the sidelink transmission occasions; or in a physical layer, the first resources are excluded from a physical-layer candidate time and frequency resource set reported from the physical layer to the MAC layer of the first node for the sidelink transmission occasions, and the second resources are added to the physical-layer candidate time and frequency resource set reported from the physical layer to the MAC layer of the first node for the sidelink transmission occasions. This is also the resource selection performed in the physical layer of the first node. Herein the process of reporting the physical-layer candidate time and frequency resource set for sidelink transmission occasions from the physical layer to the MAC layer is the seventh step in the sidelink transmission process. In this case, the physical-layer candidate time and frequency resource set for sidelink transmission occasions has already been generated and needs to be reported from the physical layer to the MAC layer of the first node. During the reporting of the physical-layer candidate time and frequency resource set for sidelink transmission occasions to the MAC layer, the transmission resources are filtered in the physical layer of the first node. In the physical layer of the first node, the first resources may be excluded, the second resources may be added, or both the first resources are excluded and the second resources are added in the physical-layer candidate time and frequency resource set reported from the physical layer to the MAC layer for the sidelink transmission occasions.

FIG. 10 is a diagram illustrating the structure of a sidelink resource determination apparatus according to an embodiment of the present application. As shown in FIG. 10, the sidelink resource determination apparatus of this embodiment includes a resource set determination module 101 and a resource selection module 102.

The resource set determination module 101 is configured to determine a physical-layer candidate time and frequency resource set for sidelink transmission occasions from a sidelink resource pool according to system configuration information. The resource selection module 102 is configured to determine physical-layer time and frequency resources for sidelink transmission occasions from the physical-layer candidate time and frequency resource set. The physical-layer candidate time and frequency resource set does not include first resources that occupy L consecutively indexed subchannels in the frequency domain; or the physical-layer candidate time and frequency resource set includes second resources that occupy L subchannels in the frequency domain, where at least one pair of adjacent subchannels for the second resources are nonconsecutively indexed; or the physical-layer candidate time and frequency resource set does not include first resources that occupy L consecutively indexed subchannels in the frequency domain; and the physical-layer candidate time and frequency resource set includes second resources that occupy L subchannels in the frequency domain, where at least one pair of adjacent subchannels for the second resources are nonconsecutively indexed. Herein, L denotes an integer greater than or equal to 1.

The sidelink resource determination apparatus of this embodiment is configured to perform the sidelink resource determination method of the embodiment shown in FIG. 7. The implementation principles and technical effects are similar and thus are not repeated herein.

FIG. 11 is a diagram illustrating the structure of a sidelink resource determination device according to an embodiment of the present application. As shown in FIG. 11, the sidelink resource determination device includes a processor 111, a memory 112, a receiver 113, and a sender 114. One or more processors 111 may be disposed in the sidelink resource determination device. FIG. 11 uses one processor by way of example. The processor 111, the memory 112, the receiver 113, and the sender 114 in the sidelink resource determination device may be connected by a bus or in other manners. FIG. 11 uses connection via a bus by way of example.

As a computer-readable storage medium, the memory 112 may be configured to store software programs, computer-executable programs, and modules, for example, program instructions/modules corresponding to the sidelink resource determination method of the embodiment shown in FIG. 7. The processor 111 is configured to execute the software programs, instructions, and modules stored in the memory 112 to apply functions and data processing of the sidelink resource determination device, that is, perform the sidelink resource determination method.

The memory 112 may include a program storage region and a data storage region. The program storage region may store an operating system and an application program required by at least one function. The data storage region may store data created based on the use of the sidelink resource determination device. Additionally, the memory 112 may include a high-speed random-access memory or a nonvolatile memory such as at least one disk memory, a flash memory or another nonvolatile solid-state memory.

The receiver 113 is a combination of one or more devices or modules having a wireless signal receiving capability. The sender 114 is a combination of one or more devices or modules having a wireless signal sending capability.

This embodiment of the present application provides a storage medium storing computer-executable instructions. When executed by a computer processor, the computer-executable instructions cause the processor to perform a sidelink resource determination method. The sidelink resource determination method includes determining a physical-layer candidate time and frequency resource set for sidelink transmission occasions from a sidelink resource pool according to system configuration information; and determining physical-layer time and frequency resources for sidelink transmission occasions from the physical-layer candidate time and frequency resource set. The physical-layer candidate time and frequency resource set does not include first resources that occupy L consecutively indexed subchannels in the frequency domain; or the physical-layer candidate time and frequency resource set includes second resources that occupy L subchannels in the frequency domain, where at least one pair of adjacent subchannels for the second resources are nonconsecutively indexed; or the physical-layer candidate time and frequency resource set does not include first resources that occupy L consecutively indexed subchannels in the frequency domain; and the physical-layer candidate time and frequency resource set includes second resources that occupy L subchannels in the frequency domain, where at least one pair of adjacent subchannels for the second resources are nonconsecutively indexed. Herein L denotes an integer greater than or equal to 1.

## Claims

1. A sidelink resource determination method, applied to a first node, comprising:
determining a physical-layer candidate time and frequency resource set for sidelink transmission occasions from a sidelink resource pool according to system configuration information; and
determining physical-layer time and frequency resources for the sidelink transmission occasions from the physical-layer candidate time and frequency resource set,
wherein the physical-layer candidate time and frequency resource set satisfies one of the following:
the physical-layer candidate time and frequency resource set does not include first resources that occupy L consecutively indexed subchannels in a frequency domain; or
the physical-layer candidate time and frequency resource set includes second resources that occupy L subchannels in a frequency domain, wherein at least one pair of adjacent subchannels for the second resources are nonconsecutively indexed; or
the physical-layer candidate time and frequency resource set does not include first resources that occupy L consecutively indexed subchannels in a frequency domain; and the physical-layer candidate time and frequency resource set includes second resources that occupy L subchannels in the frequency domain, wherein at least one pair of adjacent subchannels for the second resources are nonconsecutively indexed, and
wherein L denotes an integer greater than or equal to 1.

2. The sidelink resource determination method of claim 1, wherein the physical-layer time and frequency resources comprise one slot or multiple consecutive slots in a time domain.

3. The sidelink resource determination method of claim 1, wherein the system configuration information comprises indication information on whether to exclude the first resources, or the system configuration information comprises indication information on whether to add the second resources, or the system configuration information comprises indication information on whether to exclude the first resources and add the second resources.

4. The sidelink resource determination method of claim 1, wherein the first resources have any one of the following features:
an index of a first resource block (RB) of a lowest subchannel of the L consecutively indexed subchannels is greater than or equal to an index of a first RB in an n-th RB set and less than or equal to an index of a first RB in an (n+1)-th RB set;
a first RB of a lowest subchannel of the L consecutively indexed subchannels is in a guard band;
a lowest subchannel of the L consecutively indexed subchannels includes RBs in a guard band;
a lowest subchannel of the L consecutively indexed subchannels includes RBs in a guard band, and a number of the RBs exceeds a first threshold;
a lowest subchannel of the L consecutively indexed subchannels includes RBs in a guard band, and a ratio of a number of the RBs to a size of the lowest subchannel exceeds a second threshold;
frequency domain RB resources of the L consecutively indexed subchannels comprise RBs in an RB set and RBs in a guard band, wherein a number of the RBs in the guard band exceeds a third threshold;
at least one subchannel of the L consecutively indexed subchannels includes RBs in a guard band;
an index of a last RB of a highest subchannel of the L consecutively indexed subchannels is greater than or equal to an index of a last RB in an n-th RB set and less than or equal to an index of a second RB in an (n+1)-th RB set;
a last RB of a highest subchannel of the L consecutively indexed subchannels is in a guard band;
a highest subchannel of the L consecutively indexed subchannels includes RBs in a guard band;
a highest subchannel of the L consecutively indexed subchannels includes RBs in a guard band, and a number of the RBs exceeds a fourth threshold;
a highest subchannel of the L consecutively indexed subchannels includes RBs in a guard band, and a ratio of a number of the RBs to a size of the highest subchannel exceeds a fifth threshold; or
frequency domain RBs included in the L consecutively indexed subchannels have different interleaves across different RB sets.

5. The sidelink resource determination method of claim 4, wherein
the index of the first RB, the index of the second RB, the first threshold, the second threshold, the third threshold, the fourth threshold, and the fifth threshold are system-configured or predefined; or
the index of the first RB, the index of the second RB, the first threshold, the second threshold, the third threshold, the fourth threshold, and the fifth threshold are associated with at least one of the following: a channel busy ratio (CBR), a packet priority, a channel access priority class (CAPC), or an RB set index.

6. The sidelink resource determination method of claim 1, wherein the second resources have any one of the following features:
subchannels included in the second resources have same interleaved indexes in consecutive RB sets;
subchannels included in the second resources have consecutive interleaved indexes in any RB set;
subchannels included in the second resources have nonconsecutive interleaved indexes in any RB set; or
subchannels included in the second resources are in consecutive RB sets.

7. The sidelink resource determination method of any one of claims 1 to 6, wherein determining the physical-layer candidate time and frequency resource set for the sidelink transmission occasions from the sidelink resource pool according to the system configuration information comprises:
excluding, in a medium access control (MAC) layer, the first resources from the physical-layer candidate time and frequency resource set for the sidelink transmission occasions; or
adding, in a MAC layer, the second resources to the physical-layer candidate time and frequency resource set for the sidelink transmission occasions; or
excluding, in a MAC layer, the first resources from the physical-layer candidate time and frequency resource set for the sidelink transmission occasions; and adding, in the MAC layer, the second resources to the physical-layer candidate time and frequency resource set for the sidelink transmission occasions.

8. The sidelink resource determination method of any one of claims 1 to 6, wherein determining the physical-layer candidate time and frequency resource set for the sidelink transmission occasions from the sidelink resource pool according to the system configuration information comprises:
excluding, in a physical layer, the first resources when determining the physical-layer candidate time and frequency resource set for the sidelink transmission occasions in a time interval; or
adding, in a physical layer, the second resources when determining the physical-layer candidate time and frequency resource set for the sidelink transmission occasions in a time interval; or
excluding, in a physical layer, the first resources when determining the physical-layer candidate time and frequency resource set for the sidelink transmission occasions in a time interval; and
adding, in the physical layer, the second resources when determining the physical-layer candidate time and frequency resource set for the sidelink transmission occasions in the time interval.

9. The sidelink resource determination method of any one of claims 1 to 6, wherein determining the physical-layer candidate time and frequency resource set for the sidelink transmission occasions from the sidelink resource pool according to the system configuration information comprises:
excluding, in a physical layer, the first resources from an initialized physical-layer candidate time and frequency resource set for the sidelink transmission occasions; or
adding, in a physical layer, the second resources to an initialized physical-layer candidate time and frequency resource set for the sidelink transmission occasions; or
excluding, in a physical layer, the first resources from an initialized physical-layer candidate time and frequency resource set for the sidelink transmission occasions; and adding, in the physical layer, the second resources to the initialized physical-layer candidate time and frequency resource set for the sidelink transmission occasions.

10. The sidelink resource determination method of any one of claims 1 to 6, wherein determining the physical-layer candidate time and frequency resource set for the sidelink transmission occasions from the sidelink resource pool according to the system configuration information comprises:
excluding, in a physical layer, the first resources from a physical-layer candidate time and frequency resource set reported from the physical layer to a MAC layer of the first node for the sidelink transmission occasions; or
adding, in a physical layer, the second resources to a physical-layer candidate time and frequency resource set reported from the physical layer to a MAC layer of the first node for the sidelink transmission occasions; or
excluding, in a physical layer, the first resources from a physical-layer candidate time and frequency resource set reported from the physical layer to a MAC layer of the first node for the sidelink transmission occasions; and adding, in the physical layer, the second resources to the physical-layer candidate time and frequency resource set reported from the physical layer to the MAC layer of the first node for the sidelink transmission occasions.

11. A sidelink resource determination device, comprising:
a memory configured to store a program; and
a processor configured to execute the program to perform the following: determining a physical-layer candidate time and frequency resource set for sidelink transmission occasions from a sidelink resource pool according to system configuration information; and determining physical-layer time and frequency resources for the sidelink transmission occasions from the physical-layer candidate time and frequency resource set,
wherein the physical-layer candidate time and frequency resource set satisfies one of the following:
the physical-layer candidate time and frequency resource set does not include first resources that occupy L consecutively indexed subchannels in a frequency domain; or
the physical-layer candidate time and frequency resource set includes second resources that occupy L subchannels in a frequency domain, wherein at least one pair of adjacent subchannels for the second resources are nonconsecutively indexed; or
the physical-layer candidate time and frequency resource set does not include first resources that occupy L consecutively indexed subchannels in a frequency domain; and the physical-layer candidate time and frequency resource set includes second resources that occupy L subchannels in the frequency domain, wherein at least one pair of adjacent subchannels for the second resources are nonconsecutively indexed, and
wherein L denotes an integer greater than or equal to 1.

12. A non-transitory storage medium comprising a program stored therein, wherein when the program is executed, the sidelink resource determination method of any one of claims 1 to 10 is performed.
